# EUROPEAN PATENT APPLICATION

(11) **EP 4 163 141 A1**
(43) Date of publication of application: **12.04.2023**
(21) Application number: 21201903.8
(22) Date of filing: 11.10.2021
(51) Int. Cl.: B60K 35/00, B60K 37/06

(54) **CONTROL ELEMENT FOR A DISPLAY DEVICE, METHOD, COMPUTER PROGRAM AND APPARATUS FOR CONTROLLING OPERATION OF A DISPLAY DEVICE**

(71) Applicant: VOLKSWAGEN AG, 38440 Wolfsburg (DE)
(72) Inventor: SGRIGNA, Lucio, 12055 Berlin (DE); SONG, Inae, 10179 Berlin (DE)

(57) **Abstract**

The present invention is related to a control element (1) for a display device (2), in particular for a display device (2) having two or more display areas (3, 3', 3"), and to a method, computer program and apparatus for controlling operation of a display device (2). The invention is further related to a user device and a motor vehicle, which make use of such a control element (1), method or apparatus. The control element (1) comprises an input device (4) that is movable between two or more operating positions (5, 5', 5"), each operating position (5, 5', 5") being associated with one of the two or more display areas (3, 3', 3").

## Description

The present invention is related to a control element for a display device, in particular for a display device having two or more display areas, and to a method, computer program and apparatus for controlling operation of a display device. The invention is further related to a motor vehicle and a user device, which make use of such a control element, method or apparatus.

When a vehicle drives by itself, is open for use, and connects communities in a moving space, the interior interaction needs to adapt to satisfy many different needs. When an autonomous ride service is introduced to the general public, forming trust with the new technology is essential, especially when potential users will have differing levels of technology acceptance. In order to achieve a pleasant user experience, it is advantageous to provide information to the user during a ride and to enable access to user content, e.g. to content available on a mobile user device. For this purpose, autonomous vehicle will generally be provided with a plurality of display devices.

One advantage of autonomous vehicles is that new seat layouts are possible. The seat layout preferably takes into account the possible relationships between passengers, which may vary from family to strangers. For example, a layout with an open L-shape may be implemented. Such a layout allows passengers to sit next to each other, but likewise allows passengers to sit separate, not facing each other, if they need more individual space.

The display devices provided in a motor vehicle may need to be shared by the passengers. Therefore, a dedicated display area may be provided for each passenger. Furthermore, the passengers may be unknown to each other. In this scenario, privacy becomes an important aspect. In order to ensure privacy, private display areas may be provided in addition to shared areas.

In order to control operation of the display devices, e.g. for modifying the displayed content, control elements need to be provided. A straightforward solution is to provide separate control elements for each passenger. However, this leads to additional physical complexity and additional complexity in assigning each user to their control element. Furthermore, modifying the content displayed in a shared area requires negotiation between two users.

It is an object of the present invention to provide improved solutions for controlling operation of a display device having two or more display areas.

This object is achieved by a control element according to claim 1, by a method according to claim 10, by a computer program according to claim 11, which implements such a method, and by an apparatus according to claim 12. This object is further achieved by a motor vehicle according to claim 13 and a user device according to claim 15. The dependent claims include advantageous further developments and improvements of the present principles as described below.

According to a first aspect, a control element for a display device having two or more display areas comprises an input device that is movable between two or more operating positions, each operating position being associated with one of the two or more display areas.

According to a further aspect, a method for controlling operation of a display device having two or more display areas comprises:
- determining an operating position of an input device of a control element, the input device being movable between two or more operating positions, each operating position being associated with one of the two or more display areas;
- receiving a control command from the input device; and
- modifying content displayed in the display area associated with the determined operating position responsive to the control command.

Accordingly, a computer program comprises instructions, which, when executed by a computer, cause the computer to perform the following steps for controlling operation of a display device having two or more display areas:
- determining an operating position of an input device of a control element, the input device being movable between two or more operating positions, each operating position being associated with one of the two or more display areas;
- receiving a control command from the input device; and
- modifying content displayed in the display area associated with the determined operating position responsive to the control command.

The term computer has to be understood broadly. In particular, it also includes mobile devices, electronic control units, and other processor-based data processing devices.

The computer program can, for example, be made available for electronic retrieval or stored on a computer-readable storage medium.

According to another aspect, an apparatus for controlling operation of a display device having two or more display areas comprises:
- an evaluation unit configured to determine an operating position of an input device of a control element, the input device being movable between two or more operating positions, each operating position being associated with one of the two or more display areas;
- an input unit configured to receive a control command from the input device; and
- a processing unit configured to modify content displayed in the display area associated with the determined operating position responsive to the control command.

In order to be able to control two or more display areas of a display device with a single control element, the control element has an input device that can be moved into different operating positions. Each operating position is associated with one of the display areas. The current position of the input device thus specifies which display area can be controlled by means of the input device. The movement of the input device provides an additional possibility for a selection between multiple users. It provides an intuitive way to interact with a display that has multiple display areas. The display areas may be implemented using a dedicated display for each area. Alternatively, the may be implemented as separate areas of a common display.

In an advantageous embodiment, the input device is movable between the two or more operating positions by a sliding movement. Implementing the movement as a sliding movement has the advantage that sliding is very intuitive. As the display areas will often be arranged side by side, users will readily understand that they need to move the input device in the direction of the display area to be controlled.

In an advantageous embodiment, the input device is a knob, a trackball, or a touchpad. For example, the knob may be a rotary knob with a push button functionality or a joystick knob. Using a knob has the advantage that it provides great freedom of design. In addition, such knobs are widely used in the automotive field. Users are thus accustomed to this type of input device. However, also other types of input device may be used, such as trackballs or touchpads.

In an advantageous embodiment, the input device is movable between the two or more operating positions by a physical manipulation by a user or through a motorized manipulation. In a first operating mode, the user moves the input device in the desired direction, e.g. horizontally, to select which display area to interact with. In a second operating mode, the input device is automatically moved by a motor into a specified operating position. This automatic movement is initiated by a controller and allows notifying the users that they are expected to provide an input.

In an advantageous embodiment, the control element is configured to provide haptic feedback to a user. By providing mechanical feedback, e.g. through a force opposing a movement of the input device in a certain direction, the user receives an indication which display areas can be interacted with or not.

In an advantageous embodiment, the control element is configured to provide visual feedback to a user. The use of visual feedback has the advantage that this type of feedback can be intuitively understood by a user. Preferably, the visual feedback is given to the user by an ambient light that echoes the movement of the input device.

In an advantageous embodiment, the visual feedback is provided using a screen located below the input device. This an easy solution to provide a desired visual feedback. In addition, the screen may be used for providing additional information or changing the appearance of the input device.

In an advantageous embodiment, the display device has three display areas, two display areas being private areas and one display area being a shared area. By providing private areas for the passengers in addition to a shared area, a desired privacy is ensured. Advantageously, the private areas are arranged on both sides of the shared area.

Advantageously, a motor vehicle equipped with a display device having two or more display areas comprises a control element according to the invention or an apparatus according to the invention or is configured to perform a method according to the invention for controlling operation of the display device. For example, the motor vehicle may be a car, a bus, or a commercial vehicle, e.g. a truck. More generally, the invention can be used in land vehicles, rail vehicles, watercrafts, and aircrafts. Advantageously, the control element is arranged in an armrest of the motor vehicle. In this way, a comfortable operation of the display device is ensured. Furthermore, the interior design of the vehicle is simplified by locating the control element in a single central shared armrest.

Advantageously, a user device comprises a control element according to the invention. For example, the user device may be a remote control or a home appliance. Use of the invention is not limited to the automotive context. The described control element may in general be used for any display device that has two or more display areas.

Further features of the present invention will become apparent from the following description and the appended claims in conjunction with the figures.
- Fig. 1: schematically illustrates a control element for a display device having two or more display areas;
- Fig. 2: schematically illustrates a method for controlling operation of a display device having two or more display areas;
- Fig. 3: schematically illustrates a first embodiment of an apparatus for controlling operation of a display device having two or more display areas;
- Fig. 4: schematically illustrates a second embodiment of an apparatus for controlling operation of a display device having two or more display areas;
- Fig. 5: shows a motor vehicle suitable for use with the described solution;
- Fig. 6: shows a block diagram of an electronics system of a motor vehicle;
- Fig. 7: shows an interior layout of a motor vehicle with a roof display system;
- Fig. 8: illustrates shape and size of the roof display system;
- Fig. 9: illustrates height and angle of the roof display system;
- Fig. 10: shows the roof display system in more detail;
- Fig. 11: shows an arrangement of the control element in an armrest; and
- Fig. 12: shows exploded view of the control element.

The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

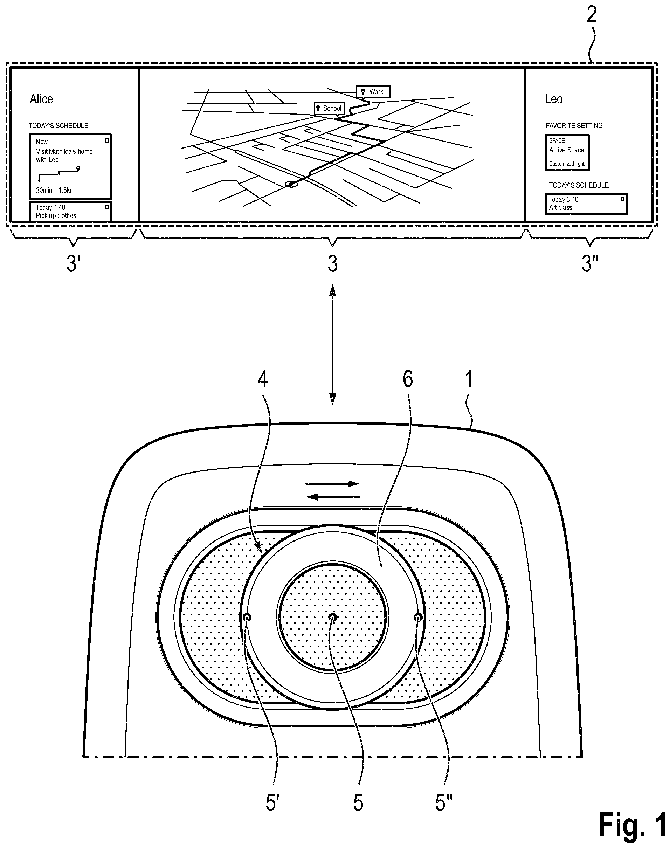

Fig. 1 schematically illustrates a control element 1 for a display device 2 having two or more display areas 3, 3', 3". The control element 1 comprises an input device 4 that is movable between two or more operating positions 5, 5', 5". Each operating position 5, 5', 5" is associated with one of the two or more display areas 3, 3', 3". The input device 4 may be movable between the two or more operating positions 5, 5', 5" by a physical manipulation by a user or through a motorized manipulation. In this example, the input device 4 is a knob 6 that is movable by a sliding movement. For example, the knob 6 may be a rotary knob with a push button functionality or a joystick knob. Of course, also other types of input device 4 may be used, such as trackballs or touchpads. Advantageously, the control element 1 is configured to provide haptic feedback or visual feedback to a user.

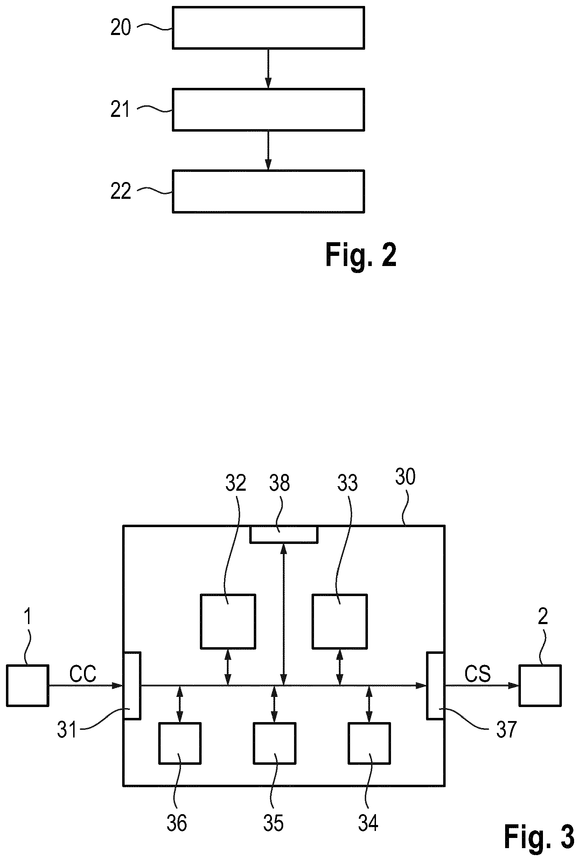

Fig. 2 schematically illustrates a method according to the invention for controlling operation of a display device having two or more display areas. For example, display device may have two private display areas and one shared display area. In a first step, an operating position of an input device of a control element is determined 20. The input device is movable between two or more operating positions, e.g. by a sliding movement. Each operating position is associated with one of the two or more display areas. The input device may be a knob, a trackball, a touchpad, etc. Determining the operating position may be performed responsive to a physical manipulation of the input device by a user. Alternatively, the input device may be brought into the determined operating position through a motorized manipulation. Upon receiving 21 a control command from the input device, content displayed in the display area associated with the determined operating position is modified 22 responsive to the control command.

Fig. 3 schematically illustrates a block diagram of a first embodiment of an apparatus 30 according to the invention for controlling operation of a display device 2 having two or more display areas. For example, display device 2 may have two private display areas and one shared display area. The apparatus 30 has an input 31, via which information may be received from a control element 1. An evaluation unit 32 is configured to determine an operating position of an input device of the control element 1. The input device is movable between two or more operating positions, e.g. by a sliding movement. Each operating position is associated with one of the two or more display areas. The input device may be a knob, a trackball, a touchpad, etc. The evaluation unit 32 may determine the operating position responsive to a physical manipulation of the input device by a user. Alternatively, the evaluation unit 32 may bring the input device into the determined operating position through a motorized manipulation. An input unit 33 is configured to receive a control command CC from the input device of the control element 1. A processing unit 34 is configured to modify content displayed in the display area associated with the determined operating position responsive to the control command CC. For this purpose, the processing unit 34 may provide respective control signals CS to the display device 2 via an output 37. A local storage unit 36 is provided, e.g. for storing data during processing. The input 31 and the output 37 may likewise be combined into a single bidirectional interface.

The evaluation unit 32, the input unit 33, and the processing unit 34 may be controlled by a control unit 35. A user interface 38 may be provided for enabling a user to modify settings of the evaluation unit 32, the input unit 33, the processing unit 34, or the control unit 35. The evaluation unit 32, the input unit 33, the processing unit 34, and the control unit 35 can be embodied as dedicated hardware units. Of course, they may likewise be fully or partially combined into a single unit or implemented as software running on a processor, e.g. a CPU or a GPU.

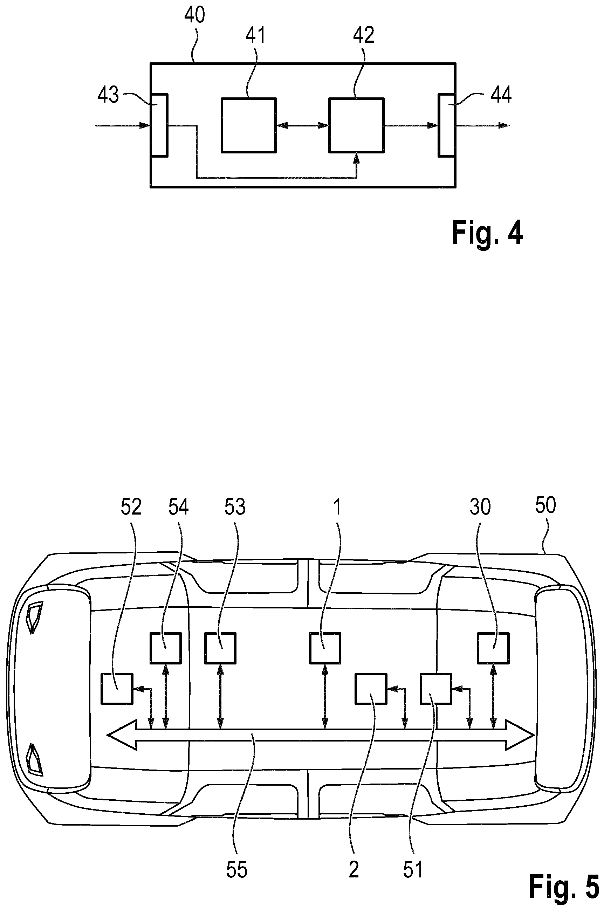

A block diagram of a second embodiment of an apparatus 40 according to the invention for controlling operation of a display device having two or more display areas is illustrated in Fig. 4. The apparatus 40 comprises a processing device 41 and a memory device 42. For example, the apparatus 40 may be a computer, a mobile device, or an electronic control unit. The memory device 42 has stored instructions that, when executed by the processing device 41, cause the apparatus 40 to perform steps according to one of the described methods. The instructions stored in the memory device 42 thus tangibly embody a program of instructions executable by the processing device 41 to perform program steps as described herein according to the present principles. The apparatus 40 has an input 43 for receiving data. Data generated by the processing device 41 are made available via an output 44. In addition, such data may be stored in the memory device 42. The input 43 and the output 44 may be combined into a single bidirectional interface.

The processing device 41 as used herein may include one or more processing units, such as microprocessors, digital signal processors, or a combination thereof.

The local storage unit 36 and the memory device 42 may include volatile and/or non-volatile memory regions and storage devices such as hard disk drives, optical drives, and/or solid-state memories.

Fig. 5 shows a motor vehicle 50 suitable for use with the described solution. In this example, the motor vehicle 50 is a car. The motor vehicle 50 comprises a display device 2 and a control element 1 for the display device 2. An apparatus 30 according to the invention is provided for controlling operation of the display device 2 based on control commands CC from the control element 1. The motor vehicle 50 further comprises a plurality of sensor units 51, e.g. a camera, a radar sensor, and an ultra-sound sensor. Of course, other types of sensor units may likewise be used, such as a laser scanner or a lidar sensor. A data transmission unit 52 is provided, e.g. for exchanging data with other motor vehicles or with a service provider. For this purpose, the data transmission unit 52 may make use of known communication technologies, such as IEEE802.11 p or 3GPP C-V2X. For storing data, a local storage unit 53 is provided. The various components of the motor vehicle 50 may be controlled by a control unit 54. Data exchange between the components of the motor vehicle 50 is performed via a network 55.

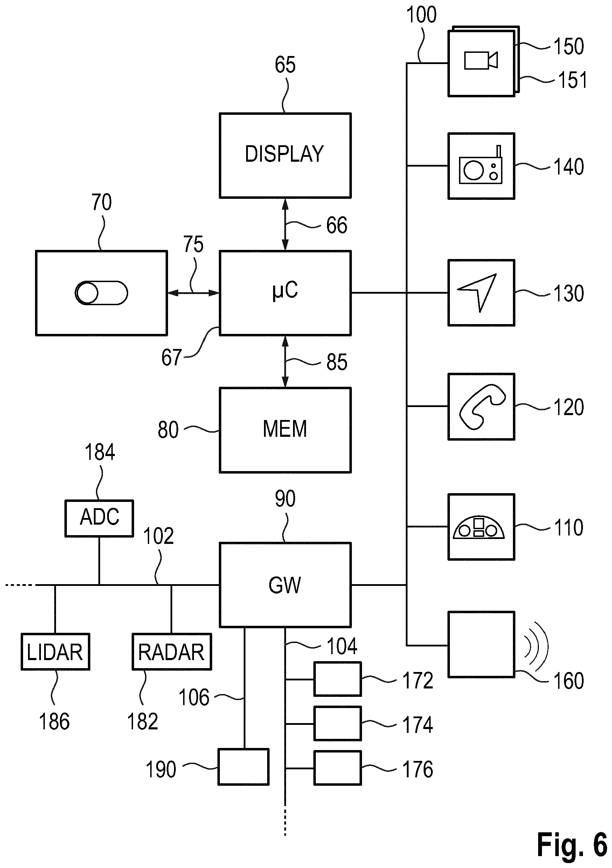

Fig. 6 schematically shows a block diagram of a board electronics system of a motor vehicle. Part of the board electronics system is an infotainment system, which comprises a display device 65, a computing device 67, a control element 70, and a memory device 80. The display device 65 is connected to the computing device 67 via4 a data line 66 and includes two or more display areas for displaying variable graphical information. The control element 70 is connected to the computing device 67 via a data line 75.

The memory device 80 is connected to the computing device 67 via a data line 85. In the memory device 80, a pictogram directory and/or symbol directory is deposited with pictograms and/or symbols for possible overlays of additional information.

The other parts of the infotainment system, such as a camera 150, radio 140, navigation device 130, telephone 120 and instrument cluster 110 are connected via a data bus 100 with the computing device 60. As data bus 100, the high-speed variant of the CAN (Controller Area Network) bus according to ISO standard 11898-2 may be used. Alternatively, an Ethernet-based bus system such as IEEE 802.03cg can be used. Bus systems implementing the data transmission via optical fibers are also usable. Examples are the MOST Bus (Media Oriented System Transport) or the D2B Bus (Domestic Digital Bus). For inbound and outbound wireless communication, the vehicle is equipped with an on-board connectivity module 160. It can be used for mobile communication, e.g. mobile communication according to the 5G standard.

Reference numeral 172 denotes an engine control unit. Reference numeral 174 denotes an ESC (electronic stability control) unit, whereas reference numeral 176 denotes a transmission control unit. The networking of such control units, all of which are allocated to the category of the drive train, typically occurs with a CAN bus 104. Since various sensors are installed in the motor vehicle and these are no longer only connected to individual control units, such sensor data are also distributed via the bus system 104 to the individual control devices.

Modern vehicles may comprise additional components, such as further sensors for scanning the surroundings, like a LIDAR sensor 186 or a RADAR sensor 182 and additional video cameras 151, e.g. a front camera, a rear camera or side cameras. Such sensors are increasingly used in vehicles for observation of the environment. Further control devices, such as an ADC (automatic driving control) unit 184, etc., may be provided in the vehicle. The RADAR and LIDAR sensors 182, 186 may have a scanning range of up to 250 m, whereas the cameras 150, 151 may cover a range from 30 m to 120 m. The components 182 to 186 are connected to another communication bus 102, e.g. an Ethernet-Bus due to its higher bandwidth for data transport. One Ethernet-bus adapted to the special needs of car communication is standardized in the IEEE 802.1Q specification. Moreover, a lot of information about the environment may be received via V2V (Vehicle-to-Vehicle) communication from other vehicles. Particularly for those vehicles that are not in line of sight to the observing vehicle, it is very advantageous to receive the information about their position and motion via V2V communication.

Reference numeral 190 denotes an on-board diagnosis interface, which is connected to another communication bus 106.

For the purpose of transmitting the vehicle-relevant sensor data via the an on-board connectivity module 160 to another vehicle or to a control center computer, a gateway 90 is provided. This gateway 90 is connected to the different bus systems 100, 102, 104 and 106. The gateway 90 is adapted to convert the data it receives via one bus to the transmission format of another bus so that it can be distributed using the packets specified for the respective other bus. For forwarding this data to the outside, i.e. to another vehicle or to the control central computer, the an on-board connectivity module 160 is equipped with a communication interface to receive these data packets and, in turn, to convert them into the transmission format of the appropriate mobile radio standard.

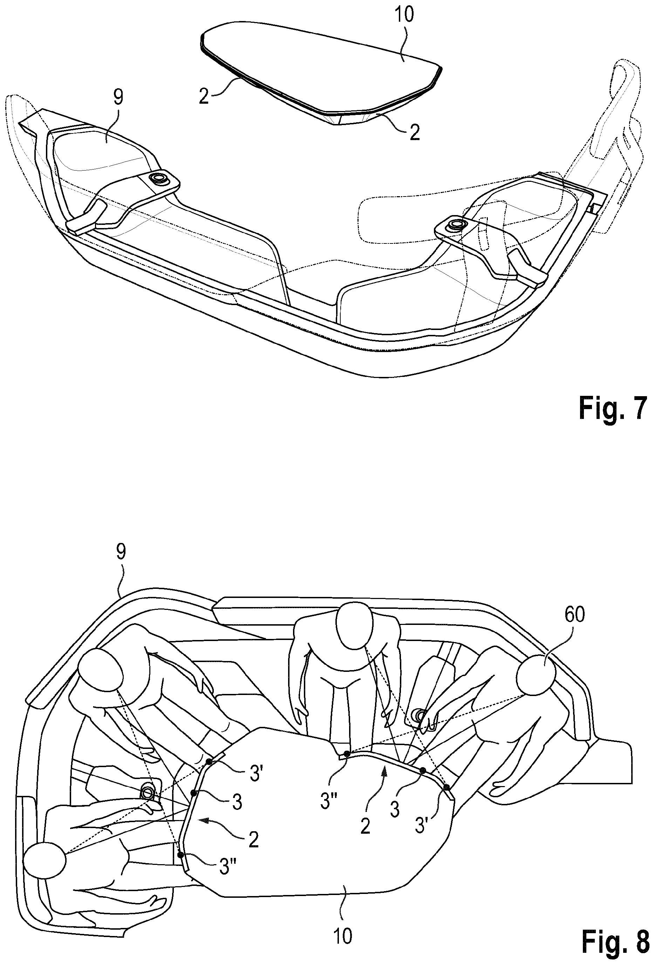

In the following, a preferred embodiment of a control element shall be described with reference to Figs. 7 to 12.

Fig. 7 shows an interior layout of a motor vehicle. The layout of the seats 9 has an open L-shape that flexibly supports diverse situations, from daily commuting to city tour, taking into account the possible relationships between passengers, which may vary from family to strangers. The layout of the seats 9 allows passengers to sit next to each other, but likewise allows passengers to sit separate, not facing each other, if they need more individual space. Arranged at the roof of the motor vehicle is a roof display system 10, which comprises two display devices 2. Each display device 2 is shared by two passengers.

Fig. 8 illustrates shape and size of the roof display system 10. The display devices 2 are spatially shaped in alignment with the seat layout. The spatial shape assists both shared and personal interaction. For this purpose, the screen sections or display areas 3, 3', 3" are aligned with the viewing angles of the users 60 so that every user 60 has an equal outlook towards their display device 2.

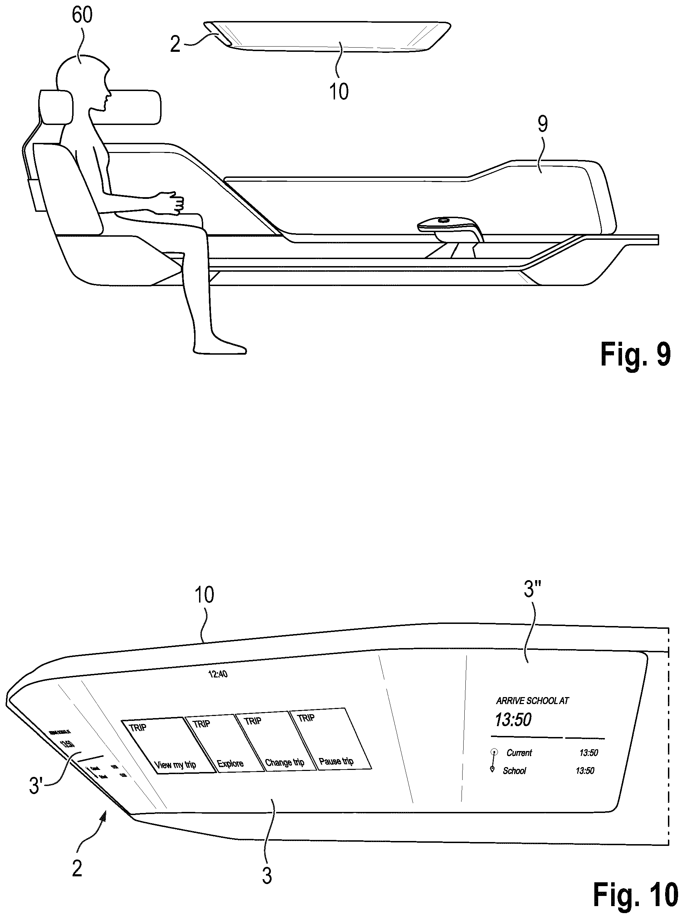

Fig. 9 illustrates height and angle of the roof display system 10. The display devices 2 are arranged such that they are easily visible, but not covering users' 60 eyesight directly. Therefore, if not needed, users 60 can disregard the display devices 2 and easily engage with other occupants or look outside.

Fig. 10 shows the roof display system 10 in more detail. Each display device 2 is shared between two passengers. However, the motor vehicle can be used by passengers unknown to each other. In this scenario, privacy becomes an important aspect. Each display device 2 has three angled surfaces, which constitute three display areas 3, 3', 3".

The outer surfaces are angled so that they cannot be seen from the opposite perspective, thus ensuring privacy to each individual user on these outer display areas 3', 3". Therefore, it is possible to offer customized information exclusive to the relevant passenger. For example, individual information on an estimated time of arrival, an upcoming trip schedule or notifications may be shown.

The shared display area 3 is visible for both passengers sitting next to each other. This shared display area 3 is provided for controlling general settings and can be used for integrating third party services.

Using the main menu shown in the shared display area 3, passengers can alter their trip en route at any time with. This gives flexibility in their journey, which is rarely possible in public transport and other ride services. Users can modify the journey in various ways, such as changing the destination, pausing the motor vehicle and cancelling the trip. For example, if an interesting place is discovered on the way home, a user can easily navigate to the depicted "pause trip" button in the main menu and subsequently pull over near the location.

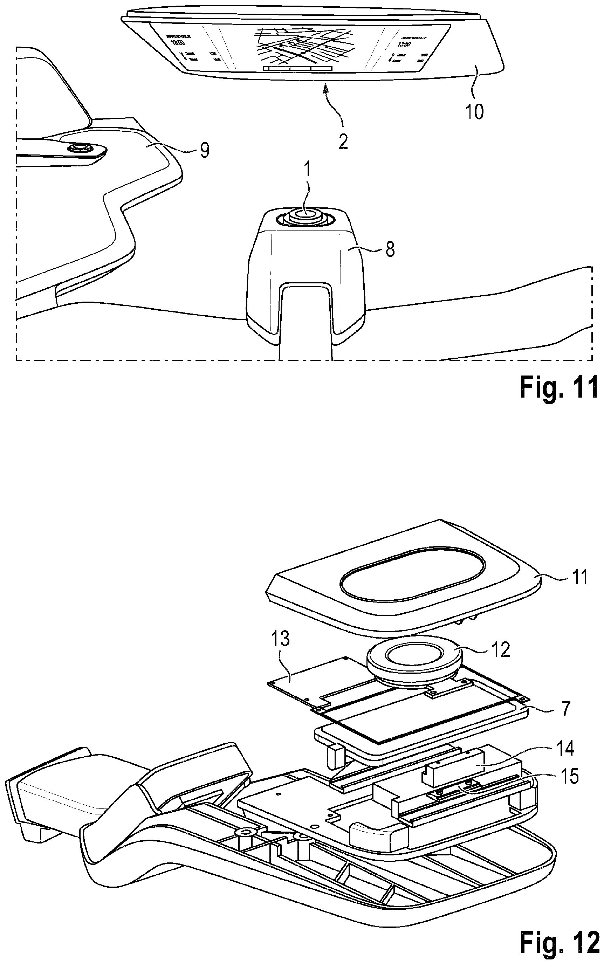

Fig. 11 shows an arrangement of the control element 1 in an armrest 8. The motor vehicle may provide multi-layered interaction, namely voice interaction, smartphone compatibility and the control element 1 in the armrest 8. Compared to a touch-based system, a physical interface in the armrest 8 provides many benefits, such as a tangible connection to the motor vehicle, easy accessibility by any user, and intuitive control over the journey.

For example, over time a repeated use of a physical interface increases its intuitiveness. Stopping the motor vehicle becomes as simple and memorable as flipping a light switch. The control element 1 in the armrest 8 is not only intuitive, but also engaging, as it has smart tactility, moving according to which option users interact with.

Fig. 12 shows exploded view of the control element 1. Main elements of the control element 1 area knob assembly 12, linear bearings15 for a smooth movement of the knob assembly 12, a haptic motor 14 for providing mechanical feedback, and a screen 7 including a diffuser for providing visual feedback, which echoes the sliding movement of the knob assembly 12. A driver board 13 is provided for controlling the knob assembly 12 and the haptic motor 14. The various components of the control element 1 are covered by a front cover 11.

### Reference numerals

- 1: Control element
- 2: Display device
- 3, 3', 3": Display area
- 4: Input device
- 5, 5', 5": Operating position
- 6: Knob
- 7: Screen
- 8: Armrest
- 9: Seat
- 10: Roof display system
- 11: Front cover
- 12: Knob assembly
- 13: Driver board
- 14: Motor
- 15: Bearings
- 20: Determine operating position of input device
- 21: Receive control command from input device
- 22: Modify displayed content responsive to control command
- 30: Apparatus
- 31: Input
- 32: Evaluation unit
- 33: Input unit
- 34: Processing unit
- 35: Control unit
- 36: Local storage unit
- 37: Output
- 38: User interface
- 40: Apparatus
- 41: Processing device
- 42: Memory device
- 43: Input
- 44: Output
- 50: Motor vehicle
- 51: Sensor units
- 52: Data transmission unit
- 53: Local storage unit
- 54: Control unit
- 55: Network
- 60: User
- 65: Display device
- 66: Data line to display device
- 67: Computing device
- 70: Control element
- 75: Data line to control element
- 80: Memory unit
- 85: Data line to memory unit
- 90: Gateway
- 100: First data bus
- 102: Second data bus
- 104: Third data bus
- 106: Fourth data bus
- 110: Instrument cluster
- 120: Telephone
- 130: Navigation device
- 140: Radio
- 150: Camera
- 151: Further cameras
- 160: On-board connectivity module
- 172: Engine control unit
- 174: Electronic stability control unit
- 176: Transmission control unit
- 182: RADAR sensor
- 184: Automatic driving control unit
- 186: LI DAR sensor
- 190: On-board diagnosis interface
- CC: Control command
- CS: Control signal

## Claims

1. A control element (1) for a display device (2) having two or more display areas (3, 3', 3"), **characterized in that** the control element (1) comprises an input device (4) that is movable between two or more operating positions (5, 5', 5"), each operating position (5, 5', 5") being associated with one of the two or more display areas (3, 3', 3").

2. The control element (1) according to claim 1, wherein the input device (4) is movable between the two or more operating positions (5, 5', 5") by a sliding movement.

3. The control element (1) according to claim 1 or 2, wherein the input device (4) is a knob (6), a trackball, or a touchpad.

4. The control element (1) according to claim 3, wherein the knob (6) is a rotary knob with a push button functionality or a joystick knob.

5. The control element (1) according to one of the preceding claims, wherein the input device (4) is movable between the two or more operating positions (5, 5', 5") by a physical manipulation by a user (60) or through a motorized manipulation.

6. The control element (1) according to one of the preceding claims, wherein the control element (1) is configured to provide haptic feedback to a user (60).

7. The control element (1) according to one of the preceding claims, wherein the control element (1) is configured to provide visual feedback to a user (60).

8. The control element (1) according to claim 7, wherein the visual feedback is provided using a screen (7) located below the input device (4).

9. The control element (1) according to one of the preceding claims, wherein the display device (2) has three display areas (3, 3', 3"), two display areas (3', 3") being private areas and one display area (3) being a shared area.

10. A method for controlling operation of a display device (2) having two or more display areas (3, 3', 3"), the method comprising:
- determining (20) an operating position (5, 5', 5") of an input device (4) of a control element (1), the input device (4) being movable between two or more operating positions (5, 5', 5"), each operating position (5, 5', 5") being associated with one of the two or more display areas (3, 3', 3");
- receiving (21) a control command (CC) from the input device (4); and
- modifying (22) content displayed in the display area (3, 3', 3") associated with the determined operating position (5, 5', 5") responsive to the control command (CC).

11. A computer program comprising instructions, which, when executed by a computer, cause the computer to perform a method according to claim 10 for controlling operation of a display device (2) having two or more display areas (3, 3', 3").

12. An apparatus (30) for controlling operation of a display device (2) having two or more display areas (3, 3', 3"), the apparatus (20) comprising:
- an evaluation unit (32) configured to determine (20) an operating position (5, 5', 5") of an input device (4) of a control element (1), the input device (4) being movable between two or more operating positions (5, 5', 5"), each operating position (5, 5', 5") being associated with one of the two or more display areas (3, 3', 3");
- an input unit (33) configured to receive (21) a control command (CC) from the input device (4); and
- a processing unit (34) configured to modify (22) content displayed in the display area (3, 3', 3") associated with the determined operating position (5, 5', 5") responsive to the control command (CC).

13. A motor vehicle (50) equipped with a display device (2) having two or more display areas (3, 3', 3"), wherein the motor vehicle (50) comprises a control element (1) according to any of claims 1 to 9 or an apparatus (30) according to claim 12 or is configured to perform a method according to claim 10 for controlling operation of the display device (2).

14. The motor vehicle (50) according to claim 13, wherein the control element (1) is arranged in an armrest (8) of the motor vehicle (50).

15. A user device, wherein the user device comprises a control element (1) according to any of claims 1 to 9 for a display device (2) having two or more display areas (3, 3', 3").

## Amended claims

### Amended claims in accordance with Rule 137(2) EPC.

1. A control element (1) for a display device (2) having two or more display areas (3, 3', 3"), the control element (1) comprising an input device (4) that is movable by a sliding movement between two or more operating positions (5, 5', 5"), each operating position (5, 5', 5") being associated with one of the two or more display areas (3, 3', 3"), **characterized in that** the control element (1) further comprises bearings (15) for the movement of the input device (4).

2. The control element (1) according to claim 1, wherein the input device (4) is a knob (6), a trackball, or a touchpad.

3. The control element (1) according to claim 2, wherein the knob (6) is a rotary knob with a push button functionality or a joystick knob.

4. The control element (1) according to one of the preceding claims, wherein the input device (4) is movable between the two or more operating positions (5, 5', 5") by a physical manipulation by a user (60) or through a motorized manipulation.

5. The control element (1) according to one of the preceding claims, wherein the control element (1) is configured to provide haptic feedback to a user (60).

6. The control element (1) according to one of the preceding claims, wherein the control element (1) is configured to provide visual feedback to a user (60).

7. The control element (1) according to claim 6, wherein the visual feedback is provided using a screen (7) located below the input device (4).

8. The control element (1) according to one of the preceding claims, wherein the display device (2) has three display areas (3, 3', 3"), two display areas (3', 3") being private areas and one display area (3) being a shared area.

9. A method for controlling operation of a display device (2) having two or more display areas (3, 3', 3"), the method comprising:
- determining (20) an operating position (5, 5', 5") of an input device (4) of a control element (1) according to one of claims 1 to 8;
- receiving (21) a control command (CC) from the input device (4); and
- modifying (22) content displayed in a display area (3, 3', 3") associated with the determined operating position (5, 5', 5") responsive to the control command (CC).

10. A computer program comprising instructions, which, when executed by a computer, cause the computer to perform a method according to claim 9 for controlling operation of a display device (2) having two or more display areas (3, 3', 3").

11. An apparatus (30) for controlling operation of a display device (2) having two or more display areas (3, 3', 3"), the apparatus (20) comprising:
- an evaluation unit (32) configured to determine (20) an operating position (5, 5', 5") of an input device (4) of a control element (1) according to one of claims 1 to 8;
- an input unit (33) configured to receive (21) a control command (CC) from the input device (4); and
- a processing unit (34) configured to modify (22) content displayed in a display area (3, 3', 3") associated with the determined operating position (5, 5', 5") responsive to the control command (CC).

12. A motor vehicle (50) equipped with a display device (2) having two or more display areas (3, 3', 3"), wherein the motor vehicle (50) comprises a control element (1) according to any of claims 1 to 8 or an apparatus (30) according to claim 11 or is configured to perform a method according to claim 9 for controlling operation of the display device (2).

13. The motor vehicle (50) according to claim 12, wherein the control element (1) is arranged in an armrest (8) of the motor vehicle (50).

14. A user device, wherein the user device comprises a control element (1) according to any of claims 1 to 8 for a display device (2) having two or more display areas (3, 3', 3").
